# EUROPEAN PATENT APPLICATION

(11) **EP 4 624 479 A1**
(43) Date of publication of application: **01.10.2025**
(21) Application number: 23894431.8
(22) Date of filing: 09.11.2023
(51) Int. Cl.: C07F 7/18, C07B 61/00, C07F 7/20

(54) **HYDROSILANE COMPOSITION AND METHOD FOR PREPARING HYDROSILYLATION PRODUCT**

(30) Priority: 21.11.2022 JP 2022185364
(71) Applicant: SHIN-ETSU CHEMICAL CO., LTD., Tokyo 1000005 (JP)
(72) Inventor: NYUUGAKU, Takeshi, Joetsu-shi, Niigata 942-8601 (JP); ISHII, Daisuke, Joetsu-shi, Niigata 942-8601 (JP)
(74) Representative: Mewburn Ellis LLP
(86) International application number: PCT/JP2023/040378
(87) International publication number: WO 2024/111422

(57) **Abstract**

The present invention provides a hydrosilane composition which contains a mixture of a hydrosilane compound represented by general formula (1) and an acid amide compound.

H-SiR¹ₙ(OR²)₃₋ₙ (1)

(In the formula, each R¹ independently represents a hydrogen atom, a halogen atom or a substituted or unsubstituted monovalent hydrocarbon group having 1 to 20 carbon atoms; each R² independently represents a substituted or unsubstituted monovalent hydrocarbon group having 1 to 20 carbon atoms; and n represents an integer of 0 to 2.)

## Description

### TECHNICAL FIELD

The present invention relates to a hydrosilane composition and to a method for preparing hydrosilylation products.

### BACKGROUND ART

Hydrosilane compounds, which have a hydrogen atom bonded to a silicon atom, are useful as organic synthesis intermediates because they can synthesize various organosilicon compounds by way of, for example, hydrosilylation with an organic compound having an unsaturated bond in the form of a vinyl group, carbonyl group, imino group or the like, or by way of dehydrative condensation with an organic compound having an active hydrogen group such as a hydroxyl group or a primary or secondary amino group. Moreover, they can be used in reduction reactions with various organic compounds, and so are also useful as reducing agents having a broad range of application.

When the hydrosilane compound is one which has a hydrolyzable silyl group, silanol groups created by the hydrolysis of such hydrolyzable silyl groups form covalent bonds with hydroxyl groups on an inorganic material surface, firmly bonding with the inorganic material. Moreover, by reacting the organic group in an organosilicon compound created by hydrosilylation on this hydrosilane compound with an organic material, it is possible to join together an organic material and an inorganic material which normally are difficult to join. In this way, organic-inorganic composite materials can be conferred with such properties as heat resistance, water resistance, weather resistance, increased mechanical strength, adhesion, dispersibility, water repellency and corrosion resistance.

By virtue of these properties, the above organosilicon compounds can be employed in a broad range of fields and applications, such as silane coupling agents, resin additives, surface treatment agents, textile treatments, adhesives, paint additives and polymer modifiers.

Examples of such hydrosilane compounds having hydrolyzable silyl groups include hydrohalosilane compounds such as trichlorosilane and dichloromethylsilane (Patent Document 1), and hydroalkoxysilane compounds such as trimethoxysilane and dimethoxmethylsisilane (Patent Document 2).

### PRIOR ART DOCUMENTS

### PATENT DOCUMENTS

Patent Document 1: JP-A H08-151388
Patent Document 2: JP-A S57-118592

### SUMMARY OF INVENTION

### TECHNICAL PROBLEM

However, with regard to the hydrohalosilane compounds of Patent Document 1, a highly corrosive hydrogen halide is generated by hydrolysis of the halosilyl groups. One method for treating this hydrogen halide involves reacting it with a basic compound such as an amine, urea or metal alkoxide to form an amine salt, urea salt, metal salt or the like, but a problem with such treatment is that the salt is discharged as a waste product. Recently, waste reduction is being cited as a major theme in sustainable development goals (SDGs). The above hydrohalosilane compounds generate a large amount of hydrogen halides, and there is concern over their impact on the environment.

Also, the above basic compounds are expensive chemical products. Moreover, the salts that form when these basic compounds react with hydrogen halides must be removed by filtration, liquid-liquid extraction or some other method, increasing the complexity of the operations and lowering the productivity.

By contrast, in the case of the hydroalkoxysilane compound of Patent Document 2, an alcohol is generated by hydrolysis of the alkoxysilyl groups. Because this alcohol can be easily recovered by distillation, extraction or the like and re-used, the process is simple and productivity is excellent.

This hydroalkoxysilane compound also has the advantage that, compared with a hydrohalosilane compound, the level of ionic impurities included in the organosilicon compound synthesized by hydrosilylation or dehydrative condensation is lower.

However, a drawback of the hydroalkoxysilane compound of Patent Document 2 is that it has a lower reactivity than hydrohalosilane compounds, resulting in decreases in the reaction selectivity and reaction rate.

That is, in a hydrosilylation reaction on an hydroalkoxysilane compound, transfer of the double bond in an organic compound having an unsaturated bond is promoted, and so the reaction selectivity of the silyl group for a double bond decreases. In addition, the reaction rate decreases due to steric hindrance by the alkoxy groups. On account of this, numerous isomers form, including structural isomers of starting compounds having a low reactivity and, as by-products of the hydrosilylation reaction, addition isomers having differing addition sites.

Moreover, because the hydroalkoxysilane compound has hydrogen atoms and alkoxy groups bonded to the silicon atom on the molecule, the compound has an extremely high self-reactivity and therefore is susceptible to decreases in purity and chemical changes due to disproportionation and dehydrogenation reactions. Hence, a decrease in the reaction rate of hydrosilylation ultimately promotes disproportionation and dehydrogenation reactions, which has the unfortunate effect of, for example, helping to increase by-products due to such side reactions.

One way to improve the reaction selectivity and reaction rate of hydrosilylation on hydroalkoxysilane compounds is to add, for example, a carboxylic acid compound or an ammonium salt. On the other hand, one way to mitigate disproportionation and dehydrogenation reactions is to add, for example, an amine compound or a carboxylic acid salt.

However, in the case of a carboxylic acid compound, the hydroxyl group on the carboxylic acid compound reacts with a hydrogen atom or alkoxy group on the hydroalkoxysilane compound. In the case of an ammonium salt, the ammonium salt decomposes under the heat of the reaction, resulting in the formation of ammonia. These additives, by interacting with the hydrosilylation reaction catalyst, have the effect of enhancing the reaction selectivity and reaction rate. However, this effect ceases to exist when the above reaction or decomposition arises and the molecular structure changes.

In the case of an amine compound, this poisons the hydrosilylation catalyst and so cannot be employed in hydrosilylation. In the case of a carboxylic acid salt, this is a solid that has a low compatibility with hydroalkoxysilane compounds and so the disproportionation and dehydrogenation reaction mitigating effect is limited to those areas which come into contact with the surfaces of the solid.

Also, each of the above additives demonstrates a solitary effect and is unable to exhibit both increases in the reaction selectivity and reaction rate and also mitigation of the disproportionation and hydrogenation reactions.

Hence, there exists a desire for the development of a hydrosilane composition which increases the reactivity of a hydrosilane compound in a hydrosilylation reaction, enhancing the reaction selectivity and reaction rate, and at the same time is also able to mitigate disproportionation and dehydrogenation reactions.

The present invention was arrived at in light of the above circumstances. An object of the invention is to provide a hydrosilane composition which increases the reactivity of a hydrosilane compound in a hydrosilylation reaction, enhancing the reaction selectivity and the reaction rate, and which at the same time is also able to mitigate disproportionation and dehydrogenation reactions. Another object is to provide a method for preparing hydrosilylation products.

### SOLUTION TO PROBLEM

The inventors have conducted intensive investigations aimed at achieving the above objects, in the course of which they have discovered that the self-reactivity of a hydrosilane compound decreases due to interaction with an acid amide compound, resulting in a stable state in which there is less decrease in purity and chemical changes have been moderated and also mitigating disproportionation and dehydrogenation reactions. They have also found that an acid amide compound that has interacted with a hydrosilane compound, through interaction with a hydrosilylation catalyst, increases the reactivity of the hydrosilane compound and thereby enhances the reaction selectivity and the reaction rate. These discoveries ultimately led to the present invention.

Accordingly, the invention provides:
1. A hydrosilane composition which includes a mixture of a hydrosilane compound of general formula (1) below
   [Chem. 1]

   H-SiR¹ₙ(OR²)₃₋ₙ (1)

   (wherein each R¹ is independently a hydrogen atom, a halogen atom or a substituted or unsubstituted monovalent hydrocarbon group of 1 to 20 carbon atoms; each R² is independently a substituted or unsubstituted monovalent hydrocarbon group of 1 to 20 carbon atoms; and n is an integer from 0 to 2) and an acid amide compound;
2. The hydrosilane composition of 1 above, wherein the acid amide compound is an acid amide compound of general formula (2) below
   [Chem. 2]

   R³-[C(=O)-NR⁴₂]ₖ (2)

   (wherein R³ is a hydrogen atom or an unsubstituted k-valent hydrocarbon group of 1 to 30 carbon atoms which may contain a heteroatom; each R⁴ is independently a hydrogen atom or an unsubstituted monovalent hydrocarbon group of 1 to 30 carbon atoms; and k is 1 or 2);
3. The hydrosilane composition of 2 above, wherein the acid amide compound is formamide or N-methylformamide;
4. The hydrosilane composition of any of 1 to 3 above, wherein the acid amide compound is included in an amount relative to the hydrosilane compound of from 0.0001 to 1 wt%;
5. The hydrosilane composition of any of 1 to 4 above, wherein a silane compound of general formula (3) below
   [Chem. 3]

   SiR¹ₘ(OR²)₄₋ₘ (3)

   (wherein R¹ and R² have the same meanings as above, and m is an integer from 0 to 4) is included in an amount relative to the hydrosilane compound of from 0.001 to 2 wt%;
6. A method for preparing a hydrosilylation product, which method includes the steps of mixing the hydrosilane composition of any of 1 to 5 above with an organic compound having an unsaturated bond; and subjecting the hydrosilane compound included in the hydrosilane composition and the organic compound having an unsaturated bond to a hydrosilylation reaction in the presence of a catalyst; and
7. The method for preparing a hydrosilylation product of 6 above, wherein the organic compound having an unsaturated bond is a compound which includes an average of one or more carbon-carbon double bond or carbon-carbon triple bond per molecule.

### ADVANTAGEOUS EFFECTS OF INVENTION

An advantageous effect of the invention is that the self-reactivity of a hydrosilane compound decreases due to interaction with an acid amide compound, resulting in a stable state in which decreased purity and chemical changes have been moderated and also enabling disproportionation and dehydrogenation reactions to be mitigated.

Moreover, in the hydrosilane composition of the invention, the acid amide compound that has interacted with the hydrosilane compound, through interaction with a hydrosilylation reaction catalyst, increases the reactivity of the hydrosilane compound, thereby enhancing the reaction selectivity and the reaction rate.

### DESCRIPTION OF EMBODIMENTS

The invention is described more fully below.

The hydrosilane composition of the invention includes a mixture of a hydrosilane compound of general formula (1) below (referred to below as "Compound (1)") and an acid amide compound.

[Chem. 4]

H-SiR¹ₙ(OR²)₃₋ₙ (1)

In general formula (1), each R¹ is independently a hydrogen atom, a halogen atom, or a substituted or unsubstituted monovalent hydrocarbon group of 1 to 20 carbon atoms, preferably 1 to 10 carbon atoms, and more preferably 1 to 8 carbon atoms.

Specific examples of the halogen atom of R¹ include fluorine, chlorine, bromine and iodine atoms.

The monovalent hydrocarbon group of R¹ may be linear, branched or cyclic. Specific examples include linear alkyl groups such as methyl, ethyl, n-propyl, n-butyl, n-pentyl, n-hexyl, n-heptyl, n-octyl, n-nonyl and n-decyl groups; branched alkyl groups such as sec-propyl, sec-butyl, tert-butyl, sec-pentyl, tert-pentyl, sec-hexyl, tert-hexyl, sec-heptyl, tert-heptyl, sec-octyl, tert-octyl, sec-nonyl, tert-nonyl, sec-decyl and tert-decyl groups; cyclic alkyl groups such as cyclopentyl and cyclohexyl groups; alkenyl groups such as vinyl, allyl, butenyl and methallyl groups; aryl groups such as phenyl, tolyl and xylyl groups; and aralkyl groups such as benzyl and phenethyl groups.

Some or all hydrogen atoms on these monovalent hydrocarbon groups may be replaced with other substituents. Specific examples of these substituents include alkoxy groups of 1 to 3 carbon atoms, such as methoxy, ethoxy and (iso)propoxy groups; halogen atoms such as fluorine, chlorine and bromine atoms; aromatic hydrocarbon groups such as the phenyl group; and cyano groups, amino groups, ester groups, ether groups, carbonyl groups, acyl groups and sulfide groups. These may be used singly or two or more may be used in combination. The substitution sites for these substituents are not particularly limited; nor is there any limitation on the number of substituents.

Of these, R¹ is preferably a hydrogen atom, a halogen atom, a substituted or unsubstituted linear, branched or cyclic alkyl group, an alkenyl group, an aryl group or an aralkyl group of 1 to 6 carbon atoms. Especially from the standpoint of the availability of the precursor materials, a hydrogen atom, halogen atom, unsubstituted linear alkyl group or alkenyl group of 1 to 3 carbon atoms is more preferred; and a hydrogen atom, chlorine atom, methyl group or ethyl group is even more preferred.

In general formula (1), each R² is independently a substituted or unsubstituted monovalent hydrocarbon group of 1 to 20 carbon atoms, preferably 1 to 10 carbon atoms, and more preferably 1 to 6 carbon atoms. Specific examples include the same substituents as the monovalent hydrocarbon groups mentioned for R¹.

In general formula (1), n is an integer from 0 to 2 (0, 1 or 2). Particularly in cases where the hydrosilylation product obtained by the subsequently described hydrosilylation reaction is used as a silane coupling agent, surface treatment agent or the like, from the standpoint of reacting with a plurality of hydroxyl groups on the surface of a substrate and increasing adhesion, n is preferably 0 or 1.

Specific examples of Compound (1) include monohydrosilane compounds such as trimethoxysilane, triethoxysilane, dimethoxymethylsilane and diethoxymethylsilane; dihydrosilane compounds such as dimethoxysilane, diethoxysilane, methoxymethylsilane and ethoxymethylsilane; and trihydrosilane compounds such as methoxysilane and ethoxysilane. One of these may be used singly or two or more may be used in combination.

Of these, particularly in cases where the hydrosilylation product obtained by the subsequently described hydrosilylation reaction is used as a silane coupling agent, surface treatment agent or the like, from the standpoint of reacting with a plurality of hydroxyl groups on the surface of a substrate and increasing adhesion, trimethoxysilane, triethoxysilane, dimethoxymethylsilane, diethoxymethylsilane, dimethoxysilane and diethoxysilane are preferred.

The acid amide compound is preferably an acid amide compound of general formula (2) below (referred to below as "Compound (2)").

[Chem. 5]

R³-[C(=O)-NR⁴₂]ₖ (2)

In general formula (2), R³ is a hydrogen atom or an unsubstituted k-valent hydrocarbon group of 1 to 30 carbon atoms, preferably 1 to 25 carbon atoms, more preferably 1 to 20 carbon atoms, and even more preferably 1 to 10 carbon atoms, which may include a heteroatom; and k is 1 or 2.

In cases where k is 1, the monovalent hydrocarbon group of R³ may be linear, branched or cyclic. Specific examples include linear alkyl groups such as methyl, ethyl, n-propyl, n-butyl, n-pentyl, n-hexyl, n-heptyl, n-octyl, n-nonyl and n-decyl groups; branched alkyl groups such as sec-propyl, sec-butyl, tert-butyl, sec-pentyl, tert-pentyl, sec-hexyl, tert-hexyl, sec-heptyl, tert-heptyl, sec-octyl, tert-octyl, sec-nonyl, tert-nonyl, sec-decyl and tert-decyl groups; cyclic alkyl groups such as cyclopentyl and cyclohexyl groups; alkenyl groups such as vinyl, allyl, butenyl and methallyl groups; aryl groups such as phenyl, naphthyl, tolyl and xylyl groups; and aralkyl groups such as benzyl and phenethyl groups. These monovalent hydrocarbon groups may include a heteroatom such as -O-, -S- or -N- on the molecular chain.

In cases where k is 2, the divalent hydrocarbon group of R³ may be linear, branched or cyclic. Specific examples include linear alkylene groups such as methylene, ethylene, trimethylene, tetramethylene, pentamethylene, hexamethylene, heptamethylene, octamethylene, nonamethylene, decylene, undecylene, dodecylene, tridecylene, tetradecylene, pentadecylene, hexadecylene, heptadecylene and octadecylene groups; branched alkylene groups such as sec-propylene, sec-butylene, tert-butylene, sec-pentylene, tert-pentylene, sec-hexylene, tert-hexylene, sec-heptylene, tert-heptylene, sec-octylene, tert-octylene, sec-nonylene, tert-nonylene, sec-decylene, tert-decylene, sec-undecylene, tert-undecylene, sec-dodecylene, tert-dodecylene, sec-tridecylene, tert-tridecylene, sec-tetradecylene, tert-tetradecylene, sec-pentadecylene, tert-pentadecylene, sec-hexadecylene, tert-hexadecylene, sec-heptadecylene, tert-heptadecylene, sec-octadecylene and tert-octadecylene groups; cyclic alkylene groups such as cyclopropylene, cyclopentylene and cyclohexylene groups; alkenylene groups such as vinylene group; and arylene groups such as o-, m- or p-phenylene groups.

Of these, R³ is preferably a hydrogen atom, a linear alkyl group of 1 to 20 carbon atoms or an alkenyl group of 2 to 20 carbon atoms. Particularly from the standpoint of the availability of the precursor materials, a hydrogen atom, a linear alkyl group of 1 to 10 carbon atoms or a linear alkenyl group of 2 to 10 carbon atoms is more preferred.

In general formula (2), each R⁴ is independently a hydrogen atom or an unsaturated monovalent hydrocarbon group of 1 to 30 carbon atoms, preferably 1 to 25 carbon atoms, more preferably 1 to 20 carbon atoms, and even more preferably 1 to 10 carbon atoms. Specific examples of this monovalent hydrocarbon group include the same substituents as the groups mentioned for R³.

Of these, R⁴ is preferably a hydrogen atom, a linear alkyl group of 1 to 20 carbon atoms or a linear alkenyl group of 2 to 20 carbon atoms. Particularly from the standpoint of the availability of the precursor materials, a hydrogen atom, a linear alkyl group of 1 to 10 carbon atoms or an alkenyl group of 2 to 10 carbon atoms is more preferred.

Specific examples of Compound (2) include N-methylacetamide, N,N-dimethylacetamide, malonamide, succinamide, maleamide, fumaramide, phthalamide, isophthalamide, terephthalamide, N-methylformamide, N,N-dimethylformamide, oxamide, glutaramide, adipamide, acetamide, acrylamide, benzamide, 2-naphthamide, nicotinamide, isonicotinamide, 2-furamide, formamide, propionamide, propiolamide, butyramide, isobutyramide, hexanamide, cyclohexanecarboxamide, methacrylamide, palmitamide, stearamide, oleamide, erucamide and cinnamamide. These may be used singly or two or more may be used in combination.

These are commercially sold as reagents. Particularly from the standpoint of availability and the co-catalytic effects, acetamide, formamide, N-methylacetamide, N,N-dimethylacetamide, N-methylformamide, malonamide, succinamide, maleamide, fumaramide, benzamide, propionamide, butyramide, palmitamide, stearamide, oleamide and erucamide are preferred. From the standpoint of their ability to easily interact with hydrosilane compounds, formamide and N-methylformamide are especially preferred.

The content of Compound (2) in the hydrosilane composition is not particularly limited, so long as it is an amount that exhibits interactions with Compound (1) and lowers the self-reactivity of Compound (1). However, from the standpoint of productivity, the content with respect to Compound (1) is preferably from 0.0001 to 1 wt%, more preferably from 0.001 to 0.5 wt%, even more preferably from 0.005 to 0.2 wt%, and still more preferably from 0.01 to 0.1 wt%.

Because disproportionation reactions and dehydrogenation reactions on Compound (1) within the above hydrosilane composition are mitigated in this invention, the content of silane compounds of general formula (3) below (referred to below as "Compound (3)") that form as a result of these reactions can be reduced.

[Chem. 6]

SiR¹ₘ(OR²)₄₋ₘ (3)

In general formula (3), R¹ and R² are as defined above.

Also, m is an integer from 0 to 4 (0, 1, 2, 3 or 4), although from the standpoint of the availability of the precursor materials, 0, 1, 2 or 3 is preferred, and 0, 1 or 2 is more preferred.

Specific examples of Compound (3) include tetraalkoxysilane compounds such as tetramethoxysilane and tetraethoxysilane; trialkoxysilane compounds such as trimethoxymethylsilane, triethoxymethylsilane, trimethoxysilane and triethoxysilane; dialkoxysilane compounds such as dimethoxydimethylsilane, diethoxydimethylsilane, dimethoxymethylsilane, diethoxymethylsilane, dimethoxysilane and diethoxysilane; and monoalkoxysilane compounds such as methoxymethylsilane, ethoxymethylsilane, methoxysilane and ethoxysilane. These may be used singly or two or more may be used in combination.

The content of Compound (3) in the hydrosilane composition serves as an indicator of the degree to which Compound (1) disproportionation reactions or dehydrogenation reactions have proceeded. From the standpoint of reducing by-products in the hydrosilylation reaction on Compound (1), the content with respect to Compound (1) is preferably from 0.001 to 2 wt%, more preferably from 0.005 to 1.5 wt%, even more preferably from 0.01 to 1.2 wt%, and still more preferably from 0.02 to 1 wt%.

The method for measuring the content of Compound (3) is not particularly limited. Use can be made of such analytic techniques as gas chromatography, ion chromatography, high-performance liquid chromatography, thin-film chromatography, nuclear magnetic resonance (NMR) spectroscopy, infrared (IR) spectroscopy and near-infrared (NIR) spectroscopy. Of these, gas chromatography is preferred.

The hydrosilane composition of the invention can be obtained by mixing together Compound (1) and Compound (2). The method for preparing a mixture of Compound (1) and Compound (2) is not particularly limited. Compound (2) may be added to Compound (1), or Compound (1) may be added to Compound (2). However, from the standpoint of solubility, it is preferable to add Compound (2) to Compound (1).

The mixing temperature is not particularly limited, with a temperature between 20°C and 50°C being preferred, and a temperature between 20°C and 40°C being more preferred. The mixing time also is not particularly limited, with 30 minutes to 3 hours being preferred, and 30 minutes to 2 hours being more preferred.

In this invention, the acid amide compound that has interacted with the hydrosilane compound within the hydrosilane composition thus obtained interacts with the hydrosilylation reaction catalyst, as a result of which the hydrosilylation activity rises, enabling the reaction selectivity and the reaction rate to be improved.

Next, the inventive method for preparing a hydrosilylation product is described
In this invention, a hydrosilylation product can be prepared by mixing a hydrosilane composition containing a mixture of Compound (1) and Compound (2) with an organic compound having an unsaturated bond (referred to below as "Compound (4)"), and subjecting Compound (1) included in the hydrosilane composition and Compound (4) to a hydrosilylation reaction in the presence of a catalyst.

Compound (4) is preferably a compound which includes an average of one or more carbon-carbon double bond or carbon-carbon triple bond per molecule. It may be suitably selected from among known compounds and used.

Specific examples include linear hydrocarbon compounds of 2 to 20 carbon atoms, such as ethylene, acetylene, propene, 1-propyne, 1-butene, 1-hexene, 2-hexene, 1-hexyne, 1-octene, 2-octene, 1-octyne, 1-decene, 2-decene, 1-decyne, 1-dodecene, 2-dodecene, 1-dodecyne, 1-tetradecene, 2-tetradecene, 1-tetradecyne, 1-hexadecene, 2-hexadecene, 1-hexadecyne, 1-octadecene, 2-octadecene, 1-octadecyne, 1-nonadecene, 2-nonadecene, 1-nonadecyne, 1-eicosene, 2-eicosene, 1-eicosyne, 1,5-hexadiene, 1,7-octadiene and 1,9-decadiene; branched hydrocarbon compounds of 3 to 8 carbon atoms, such as isobutene, 2-methyl-1-butene, 3-methyl-1-butene, 2-methyl-1-pentene, 3-methyl-1-pentene, 4-methyl-1-pentene, 2-methyl-1-hexene, 3-methyl-1-hexene, 4-methyl-1-hexene, 5-methyl-1-hexene, 2-methyl-1-heptene, 3-methyl-1-heptene, 4-methyl-1-heptene, 5-methyl-1-heptene, 6-methyl-1-heptene and diisobutylene; cyclic hydrocarbon compounds of 6 to 14 carbon atoms, such as cyclohexene, cyclooctene, styrene, divinylbenzene, norbornene, norbornadiene, cyclooctadiene, dicyclopentadiene, vinylnorbornene and 1,1-diphenylethylene; epoxide compounds such as allyl glycidyl ether, 7-octenyl glycidyl ether and vinyl cyclohexene oxide; oxetane compounds such as 3-ethyl-3-allyloxymethyloxetane; (meth)acrylate compounds such as acrylic acid, methacrylic acid, methyl (meth)acrylate, allyl (meth)acrylate and 7-octenyl (meth)acrylate; organohalogen compounds such as allyl chloride, methallyl chloride, vinylbenzyl chloride, 3,3,4,4,5,5,6,6,7,7,8,8,8-tridecafluoro-1-octene, 3,3,4,4,5,5,6,6,6-nonafluoro-1-hextene, 1,4-divinyl(perfluoro)butane, 1,6-divinyl(perfluoro)hexane and 1,8-divinyl(perfluoro)ocxane; organosilicon compounds such as vinyltrichlorosilane, vinyldichloromethylsilane, vinylchlorodimethylsilane, vinyltrimethoxysilane, vinyldimethoxymethylsilane, vinylmethoxydimethylsilane, vinyltriethoxysilane, vinyldiethoxymethylsilane, vinylethoxydimethylsilane, vinyl (tristrimethylsiloxy)silane, 3-(meth)acryloxypropyltrimethoxysilane, 3-(meth)acryloxypropyldimethoxymethylsilane, 3-(meth)acryloxypropylmethoxydimethylsilane, 3-(meth)acryloxypropyl (tristrimethylsiloxy)silane, 1,3-divinyl-1,1,3,3-tetramethyldisiloxane, 1,3-divinyl-1,1,3,3-tetramethyldisilazane, bis(diethylamino)methylvinylsilane and N,N-bis(trimethylsilyl)allylamine; ether compounds such as methyl vinyl ether, divinyl ether, phenyl vinyl ether, allyl glycol, allyl benzyl ether, diethylene glycol monoallyl ether, diethylene glycol allyl methyl ether, polyoxyethylene monoallyl ether, polyoxypropylene monoallyl ether, poly(oxyethylene-oxypropylene) monoallyl ether, polyoxyethylene diallyl ether, polyoxypropylene diallyl ether and poly(oxyethylene-oxypropylene) diallyl ether; amine compounds such as allylamine, methallylamine, N-methylallylamine, N-ethylallylamine, N,N-dimethylallylamine, N,N-diethylallylamine, N-vinylpyrrolidone, N-allylaniline, N-allylmorpholine, N-allylpiperazine, N-allyl-N-methylpiperazine, 4-allyloxy-2,2,6,6-tetramethylpiperidine and 4-allyloxy-1,2,2,6,6-pentamethylpiperidine; alcohol compounds such as allyl alcohol and methallyl alcohol; nitrile compounds such as acrylonitrile and methacrylonitrile; urea-derived compounds such as allyl isocyanate, triallyl isocyanurate and 1,3,4,6-tetrallyl glycoluril; carbonate compounds such as diallyl carbonate; and acid anhydride compounds such as allyl succinic anhydride.

Of these, in cases where the resulting hydrosilylation product is used as a silane coupling agent, surface treatment agent or the like, from the standpoint of reacting with organic groups on a substrate and imparting such properties as heat resistance, water resistance, weather resistance, increased mechanical strength, adhesion, dispersibility, water repellency and corrosion resistance, Compound (4) is preferably a linear hydrocarbon compound, a cyclic hydrocarbon compound, an epoxide compound, a (meth)acrylate compound, an organohalogen compound, an organosilicon compound, an ether compound, an amine compound, a urea-derived compound or an acid anhydride compound; more preferably a linear hydrocarbon compound, an epoxide compound, an organosilicon compound, an amine compound or a urea-derived compound; and even more preferably a linear hydrocarbon compound of 1 to 10 carbon atoms, an epoxide compound, an organosilicon compound or an amine compound.

The amount of Compound (4) used is not particularly limited, so long as it is an amount which promotes the hydrosilylation reaction. However, from the standpoint of reactivity and productivity, the amount per mole of Compound (1) is preferably from 1 to 20 moles, more preferably from 1 to 10 moles, and even more preferably from 1 to 5 moles.

The catalyst is not particularly limited so long as it is a known hydrosilylation reaction catalyst. For example, a platinum, ruthenium, rhodium, palladium, iridium or other noble metal catalyst, or an iron, cobalt, nickel or other base metal catalyst may be suitably selected and used. To achieve in particular a high reactivity, a platinum catalyst is preferred.

The platinum catalyst that is used may be suitably selected from among known platinum (Pt) compounds and complex compounds in which platinum serves as the central metal.

Specific examples include chloroplatinic acid and alcohol solutions of chloroplatinic acid, such as a 2-ethylhexyanol solution of chloroplatinic(IV) acid; toluene or xylene solutions of a platinum-1,3-divinyl-1,1,3,3-tetramethyldisiloxane complex; dichlorobis(acetonitrile)platinum and dichlorobis(benzonitrile)platinum; and dichloro(cyclooctadiene)platinum. Catalysts composed of, for example, platinum black supported on alumina, silica, carbon or the like may also be used. Any of the above may be used singly or two or more may be used in combination.

Of these, particularly from the standpoint of achieving a high reactivity, alcohol solutions of chloroplatinic acid, such as a 2-ethylhexanol solution of chloroplatinic(IV) acid, and toluene or xylene solutions of platinum-1,3-divinyl-1,1,3,3-tetramethyldisiloxane complex are preferred.

The amount of platinum catalyst used is not particularly limited, so long as it is an amount that manifests a hydrosilylation reaction catalyzing effect. However, from the standpoints of reactivity and productivity, the amount in terms of platinum metal per mole of Compound (4) is preferably from 0.0000001 to 1 mole, more preferably from 0.000001 to 0.1 mole, and even more preferably from 0.00001 to 0.01 mole.

When the hydrosilane composition and Compound (4) are mixed together, Compound (4) may be added to the hydrosilane composition or the hydrosilane composition may be added to Compound (4). However, from the standpoint of the reaction selectivity or reaction rate of the hydrosilylation reaction, adding the hydrosilane composition to Compound (4) is preferred. The hydrosilylation reaction catalyst may be added at any time, although it is preferable to add the hydrosilylation reaction catalyst to Compound (4) and subsequently add the hydrosilane composition.

The reaction temperature in the hydrosilylation reaction is not particularly limited. However, from the standpoints of reactivity and productivity, the temperature is preferably between 50°C and 200°C, more preferably between 50°C and 150°C, and even more preferably between 50°C and 100°C.

The reaction time in the hydrosilylation reaction, although not particularly limited, is preferably from 1 to 30 hours, more preferably from 1 to 20 hours, and even more preferably from 1 to 10 hours.

The above hydrosilylation reaction proceeds even in the absence of a solvent, although a solvent may be used. Examples of the solvent include hydrocarbon solvents such as pentane, hexane, cyclohexane, heptane, isooctane, benzene, toluene and xylene; ether-type solvents such as diethyl ether, tetrahydrofuran and dioxane; ester-type solvents such as ethyl acetate and butyl acetate; aprotic polar solvents such as acetonitrile and N,N-dimethylformamide; and chlorinated hydrocarbon solvents such as dichloromethane and chloroform. These solvents may be used singly or two or more may be used in combination.

### EXAMPLES

Examples and Comparative Examples are given below by way of illustration, although the invention is not limited by these Examples.

The purity of the following hydrosilane compounds is a value measured under Gas Chromatography Measurement Conditions 1 below. The purity of the silane compound that is the hydrosilylation product obtained in the hydrosilylation reaction is a value measured under Gas Chromatography Measurement Conditions 2 below.

### [Gas Chromatography Measurement Conditions 1]

| | |
|---|---|
| Gas Chromatograph: | GC-2014 (Shimadzu Corporation) |
| Capillary Column: | DB-5, 0.25 mm × 30 m × 0.25 µm (dia.) (Agilent Technologies K.K.) |
| Detector: | FID |
| Detector Temperature: | 300°C |
| Injection Port Temperature: | 280°C |
| Temperature Program: | 50°C (0 min) → 10°C/min → 200°C (0 min) |
| Carrier Gas: | helium (1.46 mL/min) |
| Injection Method: | splitting |
| Split ratio: | 1/50 |
| Amount of Sample Injected: | 1 µL |

### [Gas Chromatography Measurement Conditions 2]

| | |
|---|---|
| Gas Chromatograph: | GC-2014 (Shimadzu Corporation) |
| Packed Column: | Silicone SE-30 (GL Sciences Inc.) |
| Detector: | TCD |
| Detector Temperature: | 300°C |
| Injection Port Temperature: | 300°C |
| Temperature Program: | 70°C (0 min) → 10°C/min → 300°C (10 min) |
| Carrier Gas: | helium (50 mL/min) |
| Amount of Sample Injected: | 1 µL |

### [1] Preparation of Hydrosilane Compositions

### [Example 1-1]

Formamide, 0.01 part by weight, was added at room temperature (here and below, 25°C) to 100 parts by weight of dimethoxymethylsilane, and these ingredients were stirred together at room temperature for 1 hour. At the onset of stirring, the formamide dispersed in the dimethoxymethylsilane. In the mixture following the end of stirring, the formamide had dissolved, giving a dimethoxymethylsilane composition that was a uniform and clear colorless liquid.

The resulting dimethoxymethylsilane composition was analyzed by gas chromatography, whereupon the dimethoxymethylsilane purity was found to be 99.68%.

### [Example 1-2]

Formamide, 0.05 part by weight, was added at room temperature to 100 parts by weight of dimethoxymethylsilane, and these ingredients were stirred together at room temperature for 1 hour. At the onset of stirring, the formamide dispersed in the dimethoxymethylsilane. In the mixture following the end of stirring, the formamide had dissolved, giving a dimethoxymethylsilane composition that was a uniform and clear colorless liquid.

The resulting dimethoxymethylsilane composition was analyzed by gas chromatography, whereupon the dimethoxymethylsilane purity was found to be 99.65%.

### [Example 1-3]

Formamide, 0.1 part by weight, was added at room temperature to 100 parts by weight of dimethoxymethylsilane, and the ingredients were stirred together at room temperature for 1 hour. At the onset of stirring, the formamide dispersed in the dimethoxymethylsilane. In the mixture following the end of stirring, the formamide had dissolved, giving a dimethoxymethylsilane composition that was a uniform and clear colorless liquid.

The resulting dimethoxymethylsilane composition was analyzed by gas chromatography, whereupon the dimethoxymethylsilane purity was found to be 99.62%.

### [2] Stability Tests on Hydrosilane Compositions

### [Example 2-1]

A thoroughly nitrogen-purged 100 mL perfluoroalkoxyalkane vessel (PFA vessel) was charged with 80 g of the dimethoxymethylsilane composition obtained in Example 1-1 and then sealed, following which the stability of the composition at 25°C was checked.

The vessel was opened after 50 days, 100 days and 150 days, and the dimethoxymethylsilane composition in each case was analyzed by gas chromatography. The results are shown in Tables 1 and 2.

### [Example 2-2]

A thoroughly nitrogen-purged 20 L SUS316 vessel was charged with 15 kg of the dimethoxymethylsilane composition obtained in Example 1-2 and then sealed, following which the stability of the composition at 25°C was checked.

The vessel was opened after 15 days, 100 days and 150 days, and the dimethoxymethylsilane composition in each case was analyzed by gas chromatography. The results are shown in Tables 1 and 2.

### [Example 2-3]

A thoroughly nitrogen-purged 20 L SUS316 vessel was charged with 15 kg of the dimethoxymethylsilane composition obtained in Example 1-3 and then sealed, following which the stability of the composition at 25°C was checked.

The vessel was opened after 15 days, 100 days and 150 days, and the dimethoxymethylsilane composition in each case was analyzed by gas chromatography. The results are shown in Tables 1 and 2.

### [Comparative Example 2-1]

A thoroughly nitrogen-purged 100 mL PFA vessel was charged with 80 g of formamide-free dimethoxymethylsilane and then sealed, following which the stability of the dimethoxymethylsilane at 25°C was checked.

The vessel was opened after 50 days, 100 days and 150 days, and the dimethoxymethylsilane in each case was analyzed by gas chromatography. The results are shown in Tables 1 and 2.

**[Table 1]**

| Storage stability (25°C) | Dimethoxymethylsilane | | | |
|---|---|---|---|---|
| | Example 2-1 | Example 2-2 | Example 2-3 | Comparative Example 2-1 |
| After 0 days | 99.68 % | 99.65 % | 99.62 % | 99.64 % |
| After 50 days | 99.56 % | 99.51 % | 99.52 % | 99.39 % |
| After 100 days | 99.38 % | 99.17 % | 99.42 % | 99.10 % |
| After 150 days | 98.77 % | 99.13 % | 99.25 % | 98.01 % |

**[Table 2]**

| Storage stability (25°C) | Trimethoxymethylsilane | | | |
|---|---|---|---|---|
| | Example 2-1 | Example 2-2 | Example 2-3 | Comparative Example 2-1 |
| After 0 days | 0.09 % | 0.05 % | 0.05 % | 0.09 % |
| After 50 days | 0.14 % | 0.05 % | 0.05 % | 0.27% |
| After 100 days | 0.23 % | 0.04 % | 0.04 % | 0.48 % |
| After 150 days | 0.43 % | 0.09 % | 0.09 % | 1.11 % |

### [Example 2-4]

A thoroughly nitrogen-purged 500 mL SUS316 vessel was charged with 450 g of the dimethoxymethylsilane composition obtained in Example 1-2 and then sealed, following which the stability of the composition at 50°C was checked.

The vessel was opened after 26 days, and the dimethoxymethylsilane composition was analyzed by gas chromatography. The results are shown in Tables 3 and 4.

### [Comparative Example 2-2]

A thoroughly nitrogen-purged 500 mL SUS316 vessel was charged with 450 g of formamide-free dimethoxymethylsilane and then sealed, following which the stability of the dimethoxymethylsilane at 50°C was checked.

The vessel was opened after 26 days, and the dimethoxymethylsilane was analyzed by gas chromatography. The results are shown in Tables 3 and 4.

**[Table 3]**

| Storage stability (50°C) | Dimethoxymethylsilane | |
|---|---|---|
| | Example 2-4 | Comparative Example 2-2 |
| After 0 days | 99.65 % | 99.64 % |
| After 26 days | 97.11 % | 87.25 % |

**[Table 4]**

| Storage stability (50°C) | Trimethoxymethylsilane | |
|---|---|---|
| | Example 2-4 | Comparative Example 2-2 |
| After 0 days | 0.05 % | 0.09 % |
| After 26 days | 1.72 % | 9.86 % |

As is apparent from Tables 1 to 4, in Examples 2-1 to 2-4, due to interactions between the hydrosilane compound and the acid amide compound in the dimethoxymethylsilane compositions prepared in Examples 1-1 to 1-3, the self-reactivity of the hydrosilane compound decreased, reducing declines in the dimethoxymethylsilane purity. Also, it is apparent from the low trimethoxymethylsilane contents that the compositions have achieved a stable state in which chemical changes have moderated and that the progression of disproportionation and dehydrogenation reactions has become more gradual.

The acid amide compound has tautomerism and undergoes a tautomeric change to the structure of an acid imide compound. This acid imide compound has an imide group and a hydroxyl group that react with the hydrosilane compound. The self-reactivity of the hydrosilane compound is thought to decrease on account of interactions between these substituents.

On the other hand, in Comparative Examples 2-1 and 2-2 in which an acid amide compound was not present, disproportionation and hydrogenation reactions proceed more easily and so a decrease over time in the dimethoxymethylsilane purity is apparent. The percent drop in purity was large particularly when a heat-accelerated test was carried out in Comparative Example 2-2. Moreover, the trimethoxymethylsilane content was high, and so there was no moderation of chemical changes.

### [3] Hydrosilylation Reaction (1) Using Hydrosilane Composition

### [Example 3-1] Synthesis of n-Octyldimethoxymethylsilane

A flask equipped with a stirrer, a reflux condenser, a dropping funnel and a thermometer was charged at room temperature with 112.2 g (1.000 mol) of 1-octene and a 2-ethylhexanol solution of chloroplatinic(IV) acid (0.00003 mol in terms of platinum atoms), and the starting material solution was heated for 0.5 hour until it reached 70°C. After the internal temperature stabilized, 79.7 g of the dimethoxymethylsilane composition obtained in Example 1-2 (0.750 mole in terms of dimethoxymethylsilane compound) was added dropwise to the starting material solution over a period of 5 hours at between 60°C and 80°C, and the flask contents were stirred for 1 hour at this temperature.

The resulting reaction mixture was a uniform and clear brown liquid. This was analyzed by gas chromatography, whereupon the area % of the reaction mixture indicated the following composition. The results are shown in Table 5.

### [Comparative Example 3-1] Synthesis of n-Octyldimethoxymethylsilane

Aside from charging 0.04 g of formamide (0.05 part by weight per 100 parts by weight of dimethoxymethylsilane) together with 1-octene and a 2-ethylhexanol solution of chloroplatinic(IV) acid, and subsequently adding dropwise formamide-free dimethoxymethylsilane, the reaction was carried out in the same way as in Example 3-1.

The resulting reaction mixture was a non-uniform and clear brown liquid that contained a brown solid. This was analyzed by gas chromatography, whereupon the area % of the reaction mixture indicated the following composition. The results are shown in Table 5.

### [Comparative Example 3-2] Synthesis of n-Octyldimethoxymethylsilane

Aside from using formamide-free dimethoxymethylsilane instead of a dimethoxymethylsilane composition, the reaction was carried out in the same way as in Example 3-1.

The resulting reaction mixture was a uniform and clear brown liquid. This was analyzed by gas chromatography, whereupon the area % of the reaction mixture indicated the following composition. The results are shown in Table 5.

**[Table 5]**

| | A1 | B1 | C1 | D1 | E1 | F1 |
|---|---|---|---|---|---|---|
| Example 3-1 | 0.31 % | 0.58 % | 15.13 % | 7.13 % | 0.19% | 76.66 % |
| Comparative Example 3-1 | 13.58 % | 0.11 % | 29.83 % | 4.29 % | 0.11 % | 52.08 % |
| Comparative Example 3-2 | 0.41 % | 1.03 % | 13.96 % | 10.20 % | 0.20 % | 74.20 % |

| | | | | | | |
|---|---|---|---|---|---|---|
| A1: dimethoxymethylsilane B1: trimethoxymethylsilane C1: 1-octene D1: octene (structural isomer) E1: n-octyldimethoxymethylsilane (addition isomer) F1: n-octyldimethoxymethylsilane (target product) | | | | | | |

### [Example 3-2] Synthesis of n-Octyltrimethoxysilane

Formamide, 0.05 part by weight, was added at room temperature to 100 parts by weight of trimethoxysilane, and these ingredients were stirred together at room temperature for 1 hour. At the onset of stirring, the formamide dispersed in the trimethoxysilane. In the mixture following the end of stirring, the formamide had dissolved, giving a trimethoxysilane composition as a uniform and clear colorless liquid.

Aside from using 91.7 g of the above trimethoxysilane composition (0.750 mol in terms of the trimethoxysilane compound) instead of a dimethoxymethylsilane composition, the reaction was carried out in the same way as in Example 3-1.

The resulting reaction mixture was a uniform and clear brown liquid. This was analyzed by gas chromatography, whereupon the area % of the reaction mixture indicated the following composition. The results are shown in Table 6.

### [Comparative Example 3-3] Synthesis of n-Octyltrimethoxysilane

Aside from charging 0.05 g of formamide (0.05 part by weight per 100 parts by weight of trimethoxysilane) together with 1-octene and a 2-ethylhexanol solution of chloroplatinic(IV) acid, and then adding dropwise formamide-free trimethoxysilane, the reaction was carried out in the same way as in Example 3-2.

The resulting reaction mixture was a non-uniform and clear brown liquid containing a brown solid. This was analyzed by gas chromatography, whereupon the area % of the reaction mixture indicated the following composition. The results are shown in Table 6.

### [Comparative Example 3-4] Synthesis of n-Octyltrimethoxysilane

Aside from using formamide-free trimethoxysilane instead of a trimethoxysilane composition, the reaction was carried out in the same way as in Example 3-2.

The resulting reaction mixture was a uniform and clear brown liquid. This was analyzed by gas chromatography, whereupon the area % of the reaction mixture indicated the following composition. The results are shown in Table 6.

**[Table 6]**

| | A2 | B2 | C2 | D2 | E2 | F2 |
|---|---|---|---|---|---|---|
| Example 3-2 | 0.62 % | 1.86 % | 13.56 % | 10.31 % | 0.16 % | 73.49 % |
| Comparative Example 3-3 | 14.25 % | 1.31% | 28.99 % | 5.97 % | 0.09 % | 49.39 % |
| Comparative Example 3-4 | 0.69 % | 3.04 % | 15.21 % | 15.07 % | 0.22 % | 65.77 % |

| | |
|---|---|
| A2: | trimethoxysilane |
| B2: | tetramethoxysilane |
| C2: | 1-octene |
| D2: | octene (structural isomer) |
| E2: | n-octyltrimethoxysilane (addition isomer) |
| F2: | n-octyltrimethoxysilane (target product) |

### [Example 3-3] Synthesis of n-Octyldiethoxymethylsilane

Formamide, 0.05 part by weight, was added at room temperature to 100 parts by weight of diethoxymethylsilane, and these ingredients were stirred together at room temperature for 1 hour. At the onset of stirring, the formamide dispersed in the diethoxymethylsilane. In the mixture following the end of stirring, the formamide had dissolved, giving a diethoxymethylsilane composition as a uniform and clear colorless liquid.

Aside from using 120.8 g of the above diethoxymethylsilane composition (0.900 mol in terms of the diethoxymethylsilane compound) instead of a dimethoxymethylsilane composition, the reaction was carried out in the same way as in Example 3-1.

The resulting reaction mixture was a uniform clear brown liquid. This was analyzed by gas chromatography, whereupon the area % of the reaction mixture indicated the following composition. The results are shown in Table 7.

### [Comparative Example 3-5] Synthesis of n-Octyldiethoxymethylsilane

Aside from charging 0.06 g of formamide (0.05 part by weight per 100 parts by weight of diethoxymethylsilane) together with 1-octene and a 2-ethylhexanol solution of chloroplatinic(IV) acid, and then adding dropwise formamide-free diethoxymethylsilane, the reaction was carried out in the same way as in Example 3-3.

The resulting reaction mixture was a non-uniform and clear brown liquid containing a brown solid. This was analyzed by gas chromatography, whereupon the area % of the reaction mixture indicated the following composition. The results are shown in Table 7.

### [Comparative Example 3-6] Synthesis of n-Octyltrimethoxysilane

Aside from using formamide-free diethoxymethylsilane instead of a diethoxymethylsilane composition, the reaction was carried out in the same way as in Example 3-3.

The resulting reaction mixture was a uniform and clear brown liquid. This was analyzed by gas chromatography, whereupon the area % of the reaction mixture indicated the following composition. The results are shown in Table 7.

**[Table 7]**

| | A3 | B3 | C3 | D3 | E3 | F3 |
|---|---|---|---|---|---|---|
| Example 3-3 | 1.94 % | 0.24 % | 2.61 % | 10.22 % | 0.27 % | 84.72 % |
| Comparative Example 3-5 | 20.19 % | 0.05 % | 52.12 % | 0.55 % | 0.07 % | 27.02 % |
| Comparative Example 3-6 | 2.79 % | 0.27 % | 2.47 % | 17.35 % | 0.24 % | 76.88 % |

| | |
|---|---|
| A3: | diethoxymethylsilane |
| B3: | triethoxymethylsilane |
| C3: | 1-octene |
| D3: | octene (structural isomer) |
| E3: | n-octyldiethoxymethylsilane (addition isomer) |
| F3: | n-octyldiethoxymethylsilane (target product) |

### [Example 3-4] Synthesis of n-Octyltriethoxysilane

Formamide, 0.05 part by weight, was added at room temperature to 100 parts by weight of triethoxysilane, and these ingredients were stirred together at room temperature for 1 hour. At the onset of stirring, the formamide dispersed in the triethoxysilane. In the mixture following the end of stirring, the formamide had dissolved, giving a triethoxysilane composition as a uniform and clear colorless liquid.

Aside from using 147.9 g of the above triethoxysilane composition (0.900 mol in terms of the triethoxysilane compound) instead of a dimethoxymethylsilane composition, the reaction was carried out in the same way as in Example 3-1.

The resulting reaction mixture was a uniform and clear brown liquid. This was analyzed by gas chromatography, whereupon the area % of the reaction mixture indicated the following composition. The results are shown in Table 8.

### [Comparative Example 3-7] Synthesis of n-Octyltriethoxysilane

Aside from charging 0.07 g of formamide (0.05 part by weight per 100 parts by weight of triethoxysilane) together with 1-octene and a 2-ethylhexanol solution of chloroplatinic(IV) acid, and then adding dropwise formamide-free triethoxysilane, the reaction was carried out in the same way as in Example 3-4.

The resulting reaction mixture was a non-uniform and clear brown liquid containing a brown solid. This was analyzed by gas chromatography, whereupon the area % of the reaction mixture indicated the following composition. The results are shown in Table 8.

### [Comparative Example 3-8] Synthesis of n-Octyltriethoxysilane

Aside from using formamide-free triethoxysilane instead of a triethoxysilane composition, the reaction was carried out in the same way as in Example 3-4.

The resulting reaction mixture was a uniform and clear brown liquid. This was analyzed by gas chromatography, whereupon the area % of the reaction mixture indicated the following composition. The results are shown in Table 8.

**[Table 8]**

| | A4 | B4 | C4 | D4 | E4 | F4 |
|---|---|---|---|---|---|---|
| Example 3-4 | 3.58 % | 0.22% | 2.80 % | 10.46 % | 0.28 % | 82.66 % |
| Comparative Example 3-7 | 21.13 % | 0.05 % | 53.00 % | 0.51 % | 0.07 % | 25.24 % |
| Comparative Example 3-8 | 3.78 % | 0.25 % | 2.09 % | 15.65 % | 0.28 % | 77.95 % |

| | |
|---|---|
| A4: | triethoxysilane |
| B4: | tetraethoxysilane |
| C4: | 1-octene |
| D4: | octene (structural isomer) |
| E4: | n-octyltriethoxysilane (addition isomer) |
| F4: | n-octyltriethoxysilane (target product) |

As is apparent from Tables 5 to 8, in Examples 3-1 to 3-4, due to interactions between the hydrosilane compound and the acid amide compound, the reaction selectivity and reaction rate of the hydrosilylation reaction on the hydrosilane compound increased and the formation of low-reactivity structural isomers (D1 to D4 in the tables) of the starting compound was suppressed, resulting in an improvement in the yield of the target product (F1 to F4 in the tables).

On the other hand, in Comparative Examples 3-1, 3-3, 3-5 and 3-7, when the acid amide compound is present in the reaction system prior to interacting with the hydrosilane compound, it acts as a catalyst poison on the hydrosilylation reaction catalyst. The reaction thus stops proceeding, resulting in a decline in the yield of the target product.

The brown solid that arose during the reaction was a substance which included the acid amide compound and the hydrosilylation reaction catalyst. Here, the hydrosilylation reaction catalyst had changed to a state that does not exhibit catalytic activity.

In Comparative Examples 3-2, 3-4, 3-6 and 3-8 in which an acid amide compound is not present, because the reaction selectivity and reaction rate of the hydrosilylation reaction on the hydrosilane compound decrease, the level of structural isomer is high, resulting in a decrease in the yield of the target product.

### [4] Hydrosilylation Reaction (2) Using Hydroalkoxysilane Composition

### [Example 4-1] Synthesis of 3-Glycidoxypropyldimethoxymethylsilane

A flask equipped with a stirrer, a reflux condenser, a dropping funnel and a thermometer was charged at room temperature with 114.1 g (1.000 mol) of allyl glycidyl ether and a 2-ethylhexanol solution of chloroplatinic(IV) acid (0.00001 mol in terms of platinum atoms), and the starting material solution was heated for 0.5 hour until it reached 70°C. After the internal temperature stabilized, 85.0 g of the dimethoxymethylsilane composition obtained in Example 1-2 (0.800 mole in terms of dimethoxymethylsilane compound) was added dropwise to the starting material solution over a period of 5 hours at between 60°C and 80°C, and the flask contents were stirred for 1 hour at this temperature.

The resulting reaction mixture was a uniform and clear brown liquid. This was analyzed by gas chromatography, whereupon the area % of the reaction mixture indicated the following composition. The results are shown in Table 9.

### [Comparative Example 4-1] Synthesis of 3-Glycidoxypropyldimethoxymethylsilane

Aside from using formamide-free dimethoxymethylsilane instead of a dimethoxymethylsilane composition, the reaction was carried out in the same way as in Example 4-1.

The resulting reaction mixture was a uniform clear brown liquid. This was analyzed by gas chromatography, whereupon the area % of the reaction mixture indicated the following composition. The results are shown in Table 9.

**[Table 9]**

| | A5 | B5 | C5 | D5 | E5 | F5 |
|---|---|---|---|---|---|---|
| Example 4-1 | 0.00 % | 0.20 % | 0.00 % | 11.85 % | 0.85 % | 87.10 % |
| Comparative Example 4-1 | 0.06 % | 0.37 % | 0.00 % | 12.81 % | 0.95 % | 85.81 % |

| | |
|---|---|
| A5: | dimethoxymethylsilane |
| B5: | trimethoxymethylsilane |
| C5: | allyl glycidyl ether |
| D5: | propenyl glycidyl ether |
| E5: | 2-glycidoxy-1-methyl-ethyldimethoxymethylsilane (addition isomer) |
| F5: | 3-glycidoxypropyldimethoxymethylsilane (target product) |

### [Example 4-2] Synthesis of 3-Glycidoxypropyltrimethoxysilane

Formamide, 0.05 part by weight, was added at room temperature to 100 parts by weight of trimethoxysilane, and these ingredients were stirred together at room temperature for 1 hour. At the onset of stirring, the formamide dispersed in the trimethoxysilane. In the mixture following the end of stirring, the formamide had dissolved, giving a trimethoxysilane composition as a uniform, clear colorless liquid.

Aside from using 85.0 g of the above trimethoxysilane composition (0.800 mol in terms of the trimethoxysilane compound) instead of a dimethoxymethylsilane composition, the reaction was carried out in the same way as in Example 4-1.

The resulting reaction mixture was a uniform and clear brown liquid. This was analyzed by gas chromatography, whereupon the area % of the reaction mixture indicated the following composition. The results are shown in Table 10.

### [Comparative Example 4-2] Synthesis of 3-Glycidoxypropyltrimethoxysilane

Aside from using formamide-free trimethoxysilane instead of a trimethoxysilane composition, the reaction was carried out in the same way as in Example 4-2.

The resulting reaction mixture was a uniform and clear brown liquid. This was analyzed by gas chromatography, whereupon the area % of the reaction mixture indicated the following composition. The results are shown in Table 10.

**[Table 10]**

| | A6 | B6 | C6 | D6 | E6 | F6 |
|---|---|---|---|---|---|---|
| Example 4-2 | 0.00 % | 0.50 % | 0.00 % | 11.88 % | 1.02 % | 86.60 % |
| Comparative Example 4-2 | 0.06 % | 0.93 % | 0.00 % | 12.84 % | 1.14 % | 85.03 % |

| | |
|---|---|
| A6: | trimethoxysilane |
| B6: | tetramethoxysilane |
| C6: | allyl glycidyl ether |
| D6: | propenyl glycidyl ether |
| E6: | 2-glycidoxy-1-methyl-ethyltrimethoxysilane (addition isomer) |
| F6: | 3-glycidoxypropyltrimethoxysilane (target product) |

### [Example 4-3] Synthesis of 1-Dimethoxymethylsilyl-2-trimethoxysilylethane

A flask equipped with a stirrer, a reflux condenser, a dropping funnel and a thermometer was charged at room temperature with 143.2 g (1.000 mol) of vinyltrimethoxysilane and a 2-ethylhexanol solution of chloroplatinic(IV) acid (0.00001 mol in terms of platinum atoms), and the starting material solution was heated for 0.5 hour until it reached 70°C. After the internal temperature stabilized, 85.0 g of the dimethoxymethylsilane composition obtained in Example 1-2 (0.800 mole in terms of dimethoxymethylsilane compound) was added dropwise to the starting material solution over a period of 5 hours at between 60°C and 80°C, and the flask contents were stirred for 1 hour at this temperature.

The resulting reaction mixture was a uniform and clear brown liquid. This was analyzed by gas chromatography, whereupon the area % of the reaction mixture indicated the following composition. The results are shown in Table 11.

### [Comparative Example 4-3] Synthesis of 1-Dimethoxymethylsilyl-2-trimethoxysilylethane

Aside from using formamide-free dimethoxymethylsilane instead of a dimethoxymethylsilane composition, the reaction was carried out in the same way as in Example 4-3.

The resulting reaction mixture was a uniform and clear brown liquid. This was analyzed by gas chromatography, whereupon the area % of the reaction mixture indicated the following composition. The results are shown in Table 11.

**[Table 11]**

| | A7 | B7 | C7 | D7 | E7 | F7 |
|---|---|---|---|---|---|---|
| Example 4-3 | 1.41 % | 1.32 % | 19.71 % | 1.25 % | 16.78 % | 59.53 % |
| Comparative Example 4-3 | 0.43 % | 1.78 % | 19.31 % | 1.50 % | 22.58 % | 54.40 % |

| | |
|---|---|
| A7: | dimethoxymethylsilane |
| B7: | trimethoxymethylsilane |
| C7: | vinyltrimethoxysilane |
| D7: | ethyltrimethoxysilane |
| E7: | 1-dimethoxymethylsilyl-1-trimethoxysilylethane (addition isomer) |
| F7: | 1-dimethoxymethylsilyl-2-trimethoxysilylethane (target product) |

### [Example 4-4] Synthesis of N-Phenyl-3-aminopropyltrimethoxysilane

Formamide, 0.05 part by weight, was added at room temperature to 100 parts by weight of trimethoxysilane, and these ingredients were stirred together at room temperature for 1 hour. At the onset of stirring, the formamide dispersed in the trimethoxysilane. In the mixture following the end of stirring, the formamide had dissolved, giving a trimethoxysilane composition as a uniform and clear colorless liquid.

A flask equipped with a stirrer, a reflux condenser, a dropping funnel and a thermometer was charged at room temperature with 133.2 g (1.000 mol) of N-allylaniline and a toluene solution of platinum-1,3-divinyl-1,1,3,3-tetramethyldisiloxane complex (0.0001 mol in terms of platinum atoms), and the starting material solution was heated for 0.5 hour until it reached 70°C. After the internal temperature stabilized, 110.0 g of the above trimethoxysilane composition (0.900 mole in terms of trimethoxysilane compound) was added dropwise to the starting material solution over a period of 5 hours at between 60°C and 80°C, and stirred for 1 hour at this temperature.

The resulting reaction mixture was a uniform and clear light-yellow liquid. This was analyzed by gas chromatography, whereupon the area % of the reaction mixture indicated the following composition. The results are shown in Table 12.

### [Comparative Example 4-4] Synthesis of N-Phenyl-3-aminopropyltrimethoxysilane

Aside from using formamide-free trimethoxysilane instead of a trimethoxysilane composition, the reaction was carried out in the same way as in Example 4-4.

The resulting reaction mixture was a uniform and clear light-yellow liquid. This was analyzed by gas chromatography, whereupon the area % of the reaction mixture indicated the following composition. The results are shown in Table 12.

**[Table 12]**

| | A8 | B8 | C8 | D8 | E8 | F8 |
|---|---|---|---|---|---|---|
| Example 4-4 | 1.41 % | 2.86 % | 2.57 % | 1.19 % | 4.53 % | 87.44 % |
| Comparative Example 4-4 | 1.15 % | 2.61 % | 2.97 % | 1.60 % | 6.54 % | 85.13 % |

| | |
|---|---|
| A8: | trimethoxysilane |
| B8: | tetramethoxysilane |
| C8: | N-allylaniline |
| D8: | N-propenylaniline |
| E8: | N-phenyl-2-amino-1-methyl-ethyltrimethoxysilane (addition isomer) |
| F8: | N-phenyl-3-aminopropyltrimethoxysilane(target product) |

As is apparent from Tables 9 to 12, in Examples 4-1 to 4-4, due to interaction between the hydrosilane compound and the acid amide compound, the reaction selectivity of the hydrosilylation reaction on the hydrosilane compound increased and the formation of addition isomers having differing addition sites (E5 to E8 in the tables), which are by-products of the hydrosilylation reaction, was suppressed. In addition, the formation of low-reactivity structural isomers of the starting compound (D5 to D8 in the tables) was suppressed, demonstrating that the yield of the target product (F5 to F8 in the tables) is improved.

On the other hand, in Comparative Examples 4-1 to 4-4, when an acid amide compound was not present, the reaction selectivity for the hydrosilane compound in the hydrosilylation reaction was low, resulting in high levels of addition isomers and structural isomers and a decreased yield of the target product.

## Claims

1. A hydrosilane composition comprising a mixture of a hydrosilane compound of general formula (1) below
[Chem. 1]
H-SiR¹ₙ(OR²)₃₋ₙ (1)
(wherein each R¹ is independently a hydrogen atom, a halogen atom or a substituted or unsubstituted monovalent hydrocarbon group of 1 to 20 carbon atoms; each R² is independently a substituted or unsubstituted monovalent hydrocarbon group of 1 to 20 carbon atoms; and n is an integer from 0 to 2) and an acid amide compound.

2. The hydrosilane composition of claim 1, wherein the acid amide compound is an acid amide compound of general formula (2) below
[Chem. 2]
R³-[C(=o)-NR⁴₂]ₖ (2)
(wherein R³ is a hydrogen atom or an unsubstituted k-valent hydrocarbon group of 1 to 30 carbon atoms which may contain a heteroatom; each R⁴ is independently a hydrogen atom or an unsubstituted monovalent hydrocarbon group of 1 to 30 carbon atoms; and k is 1 or 2).

3. The hydrosilane composition of claim 2, wherein the acid amide compound is formamide or N-methylformamide.

4. The hydrosilane composition of any one of claims 1 to 3, wherein the acid amide compound is included in an amount relative to the hydrosilane compound of from 0.0001 to 1 wt%.

5. The hydrosilane composition of any one of claims 1 to 4, wherein a silane compound of general formula (3) below
[Chem. 3]
SiR¹ₘ(OR²)₄₋ₘ (3)
(wherein R¹ and R² have the same meanings as above, and m is an integer from 0 to 4) is included in an amount relative to the hydrosilane compound of from 0.001 to 2 wt%.

6. A method for preparing a hydrosilylation product, comprising the steps of mixing the hydrosilane composition of any one of claims 1 to 5 with an organic compound having an unsaturated bond; and subjecting the hydrosilane compound included in the hydrosilane composition and the organic compound having an unsaturated bond to a hydrosilylation reaction in the presence of a catalyst.

7. The method for preparing a hydrosilylation product of claim 6, wherein the organic compound having an unsaturated bond is a compound which includes an average of one or more carbon-carbon double bond or carbon-carbon triple bond per molecule.
